(19) **Europäisches Patentamt European Patent Office Office européen des brevets**

(11) **EP 3 076 153 B1**

(12) **EUROPEAN PATENT SPECIFICATION**

(45) Date of publication and mention of the grant of the patent:
**08.11.2017 Bulletin 2017/45**

(51) Int Cl.:
***G01N 3/42*** *(2006.01)*

(21) Application number: **16160348.5**

(22) Date of filing: **15.03.2016**

(54) **METHOD FOR CALCULATING AN INDENTER AREA FUNCTION AND QUANTIFYING A DEVIATION FROM THE IDEAL SHAPE OF AN INDENTER**

VERFAHREN ZUR BERECHNUNG EINER STEMPELBEREICHSFUNKTION UND ZUR QUANTIFIZIERUNG EINER ABWEICHUNG VON DER IDEALEN FORM EINES STEMPELS

PROCÉDÉ POUR CALCULER UNE FONCTION DE ZONE DE PÉNÉTRATION ET DE QUANTIFICATION D'UN ÉCART À PARTIR DE LA FORME IDÉALE D'UN PÉNÉTRATEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.03.2015 US 201514670175**

(43) Date of publication of application:
**05.10.2016 Bulletin 2016/40**

(73) Proprietor: **Nanovea, Inc.**
**Irvine, CA 92618 (US)**

(72) Inventors:
• **LEROUX, Pierre**
**Laguna Hills, California (US)**
• **VALENZUELA, Fernando**
**Lake Forrest, California (US)**

(74) Representative: **Awapatent A/S**
**Strandgade 56**
**1401 Copenhagen K (DK)**

(56) References cited:
**US-A1- 2005 154 540    US-A1- 2014 078 299**

• **Laurence Brice: "ESTABLISHMENT OF A MARTENS HARDNESS CALIBRATION SERVICE", , 1 January 2004 (2004-01-01), XP055298320, Retrieved from the Internet: URL:http://www.imeko.org/publications/tc5-2004/IMEKO-TC5-2004-006.pdf**
• **G Aggag ET AL: "XVIII IMEKO WORLD CONGRESS Metrology for a Sustainable Development EFFECT OF LOADING RATE AND DURATION TIME ON INDENTATION HARDNESS MEASUREMENTS", , 22 September 2006 (2006-09-22), XP055298719, Retrieved from the Internet: URL:http://www.imeko.org/publications/wc-2006/PWC-2006-TC5-011u.pdf [retrieved on 2016-08-30]**
• **K Germak: "Indentation Velocity Effect on Martens Hardness Measurement (PDF Download Available)", , 31 January 2002 (2002-01-31), XP055298195, Retrieved from the Internet: URL:https://www.researchgate.net/publication/236609770_Indentation_Velocity_Effect_on_Martens_Hardness_Measurement [retrieved on 2016-08-29]**

## Description

### FIELD OF USE

The present disclosure relates generally to calibration methods of an indenter for material testing, such as hardness indentation testing, wear testing, and scratch testing, and, more particularly, to methods for calculating an indenter area function and quantifying a deviation from the ideal shape of an indenter.

### BACKGROUND

It is widely accepted that the most significant source of uncertainty in material testing measurement is the geometry of the indenter tip. The area function, also known as the indenter shape function, must be calibrated carefully by additional measurements, so that any deviations from the non-ideal indenter geometry are taken into account.

Currently, a number of calibration processes have been used to ascertain the area function geometry for a diamond indenter. For example, according to the American Society for Testing and Materials (ASTM) E2546-07 (ASTM, 2007), atomic force microscopy (AFM) is generally recommended to directly measure an indenter in order to obtain the indenter area function. Specifically, AFM requires that the operator use an atomic force microscope for imaging an indenter and to directly measure the size of the indenter and perform accurate measurements to find the indenter area function. ASTM E2546-07, however, provides no guidance as to the most appropriate method of measuring the indenter.

Another method in ascertaining the indenter area function is performing an indirect calibration-*i.e.*, by indenting a reference material exhibiting known elastic properties (*e.g.,* fused silica) and deducing the contact area implicitly. Specifically, the operator performs numerous independent depth versus load indentations (often up to 100 tests) across a range of loads on a standard sample of known elastic modulus $E$ and calculates the area function required to obtain the expected mechanical properties on that well-known sample. However, this indirect calibration method can take hours and usually lacks accuracy at extremely low loads due to the slight variations between measurements caused by drift or inaccurate contact points. Although recommended by the equipment manufacturers, this indirect iterative procedure is based on the peculiar assumption that the reduced modulus of the reference material is constant at all depths. In other words, while ascertaining an area function of an indenter, this method assumes that the testing instrument is in compliance, thereby often resulting in misleading calculations.

Despite these currently available methods, utilizing the AFM or indirect calibration techniques to obtain the area function of an indenter is very time consuming and very cumbersome. Multiple hours are expended to perform all the tests and more time is often needed to analyze the test results. Importantly, because the point of contact for each indenter varies, each indenter may also have its own point of uncertainty. Thus, the overall calibration of the indenter is subject to additional errors due to multiple separated indents. This is especially true due to any possible slight measurement changes during testing and the time when data is recorded.

ASTM E2546-07 is also silent as to how to establish whether a diamond indenter is no longer fit for testing. This lack of guidance is not only an issue for any indentation testing but also for scratch testing where ascertaining the status of the quality of an indenter is critical. Currently, only two options are known to exist that provide some indication as to the status of an indenter-*i.e.*, (1) obtaining values from standard tests obtained on reference samples such as silica for indentation and coating of TiN on steel for scratch testing and (2) scanning the indenter via an AFM or scanning electron microscope (SEM). Although these methods can provide some indication of an indenter's fitness for testing, no precise and repeatable method is used presently.

Thus, what is needed is a new and improved method for calculating the indenter area function and quantifying the indenter deviation from its ideal shape. Preferably, the new and improved method is short and accurate-*i.e.*, by utilizing a single indention test (or possibly very few indentation tests for averaging) across the full range of loads on a standard sample such as silica - and (2) may be used to accurately verify whether an indenter diverts from the perfect shape or its original shape.

"Laurence Brice, ESTABLIHMENT OF A MARTENS HARDNESS CALIBRATION SERVICE, Hardness Measurement Theory and Application in Laboratories and Industries, 11-12 November, 2004, Washington, D.C., USA" discloses a method for determining Martens Hardness.

### SUMMARY OF EMBODIMENTS

To minimize the limitations in the prior art, the present specification discloses a new and improved method for calculating an indenter area function and quantifying a deviation from the ideal shape of an indenter.

One embodiment may be a method for calculating an indenter area function and quantifying a deviation from the ideal shape of an indenter, the steps comprising: providing a material testing apparatus, an indenter, and a sample; wherein the material testing apparatus comprises: a frame, an indenter module assembly, and a table; wherein the indenter module assembly comprises a force transducer and a displacement sensor; coupling the indenter to the material testing apparatus; wherein the indenter module assembly is configured to actuate the indenter along a displacement axis; wherein the force transducer is configured to determine one or more applied loads *F* of the indenter against the sample; placing the sample on the table of the material testing apparatus, such that the indenter may be in contact with a surface of the sample; performing at least one indentation test by applying the one or more applied loads *F* to the indenter and the sample; determining the one or more applied loads *F* with the force transducer; determining the *depth h* of the indenter with the displacement sensor; recording a load data and a depth data; wherein the recording of the load data and the depth data is based on the one or more applied loads F as a function of the *depth h* of the indenter on the sample; calculating a Martens hardness data *HM* of the surface of the sample; and calculating an indenter area function *A(h)* based on the Martens hardness data. The method may further comprise the step of: normalizing the Martens hardness data *HM.* The normalizing step may be based on a material type of the sample and a tip type of the indenter. The loading rate may increase between approximately 0 to 5 mN in approximately two minutes or less, such that the indenter may be initially applied to the surface of the sample very slowly at a plurality of low loads. The indenter may be selected from the group of indenters consisting of: a Berkovich and a Vickers; wherein the sample may be a fused silica; and wherein the loading rate of the indentation test may gradually increase between approximately 10 to 60 mN in approximately 20 seconds. The indenter may comprise a spherical tip; wherein the sample may have a Martens hardness *HM* less than approximately 4 GPa The step of performing the at least one indentation test may be performed in less than approximately three minutes and may provide the load data and the depth data for calculating the area function *A(h).* The indenter may be a Vickers indenter; wherein the calculating step of the Martens Hardness data *HM* may be calculated by the following:

$$HM = F/26.43h^2$$

The indenter may be a Berkovich indenter; wherein the calculating step of the Martens Hardness data *HM* may be calculated by the following:

$$HM = F/26.44h^2$$

The material testing apparatus may be selected from the group of material testing apparatuses consisting of: a scratch testing apparatus, a hardness indentation apparatus, and a wear testing apparatus. The indenter may be selected from the group of indenters consisting of: a Berkovich, a Vickers, a Knoop, a spherical, a cubed corner, and a conico spherical. The indenter may be spherical; wherein the surface of the sample may be soft and uniform.

Another embodiment may be a method for calculating an indenter area function and quantifying a deviation from the ideal shape of an indenter, the steps comprising: providing a material testing apparatus, an indenter, and a sample; wherein the material testing apparatus comprises: a frame, an indenter module assembly, and a table; wherein the indenter module assembly comprises a force transducer and a displacement sensor; calculating a first indenter area function $A(h)_1$ of the indenter; using the indenter one or more times to measure a surface of one or more materials; calculating a second indenter area function $A(h)_2$ of the indenter; and comparing the second indenter area function $A(h)_2$ with the first indenter area function $A(h)_1.$ The steps of calculating the first indenter area functions $A(h)_1$ of the indenter and the second indenter area functions $A(h)_2$ of the indenter may comprise the following steps: coupling the indenter to the material testing apparatus; wherein the indenter module assembly is configured to actuate the indenter along a displacement axis; wherein the force transducer is configured to determine one or more applied loads *F* of the indenter against the sample; placing the sample on the table of the material testing apparatus, such that the indenter may be in contact with a surface of the sample; performing at least one indentation test by applying the one or more applied loads *F* to the indenter and the sample; determining the one or more applied loads *F* with the force transducer; determining the *depth h* of the indenter with the displacement sensor; recording a load data and a depth data; wherein the recording of the load data and the depth data is based on the one or more applied loads *F* as a function of the *depth h* of the indenter on the sample; calculating a Martens Hardness data *HM* of the surface of the sample; and calculating the indenter area functions $A(h)_1$ and $A(h)_2$ based on the Martens hardness data. The method may further comprise the step of: normalizing the Martens hardness data *HM.* The normalizing step is based on a material type of the sample and a tip type of the indenter. The loading rate may increase between approximately 0 to 5 mN in approximately two minutes or less, such that the indenter is initially applied to the surface of the sample very slowly at a plurality of low loads. The indenter may be selected from the group of indenters consisting of: a Berkovich and a Vickers; wherein the sample may be a fused silica; and wherein the loading rate of the indentation test may gradually increase between approximately 10 to 60 mN in approximately 20 seconds. The step of performing the at least one indentation test may be performed in less than approximately three minutes and may provide the load data and the depth data for calculating the area function *A(h)*. The indenter may be a Vickers indenter; wherein the calculating step of the Martens Hardness data *HM* is calculated by the following:

$$HM=F/26.43h^2$$

The indenter may be a Berkovich indenter; wherein the calculating step of the Martens Hardness data *HM* is calculated by the following:

$$HM=F/26.44h^2$$

The indenter may comprise a spherical tip; wherein the sample has a Martens hardness *HM* less than approximately 4 GPa. The indenter may comprise a spherical tip; wherein the sample may be selected from the group of samples consisting of: a copper, an aluminum, and an acetal homopolymer aluminum.

Another embodiment may be a method for calculating an indenter area function and quantifying a deviation from the ideal shape of an indenter, the steps comprising: providing a material testing apparatus, an indenter, and a sample; wherein the material testing apparatus comprises: a frame, an indenter module assembly, and a table; wherein the indenter module assembly comprises a force transducer and a displacement sensor; calculating a first indenter area function $A(h)_1$ of the indenter; coupling the indenter to the material testing apparatus; wherein the indenter module assembly is configured to actuate the indenter along a displacement axis; wherein the force transducer is configured to determine one or more applied loads *F* of the indenter against the sample; placing the sample on the table of the material testing apparatus, such that the indenter may be in contact with a surface of the sample; performing at least one indentation test by applying the one or more applied loads *F* to the indenter and the sample; determining the one or more applied loads *F* with the force transducer; determining the depth *h* of the indenter with the displacement sensor; recording a load data of the one or more applied loads *F* as a function of *depth h* of the indenter on the sample; calculating a Martens Hardness data *HM* of the surface of the sample; normalizing the Martens hardness data *HM*; wherein the normalizing step is based on a material type of the sample and a tip type of the indenter; calculating a second indenter area function $A(h)_2$ based on the Martens hardness data; and comparing the second indenter area function $A(h)_2$ with the first indenter area function $A(h)_1$. The loading rate may increase between approximately 0 to 5 mN in approximately two minutes or less, such that the indenter is initially applied to the surface of the sample very slowly at a plurality of low loads. The indenter may be selected from the group of indenters consisting of: a Berkovich and a Vickers; wherein the sample may be a fused silica; and wherein the loading rate of the indentation test may gradually increase between approximately 10 to 60 mN in approximately 20 seconds. The indenter may comprise a spherical tip; wherein the sample may have a Martens hardness *HM* less than approximately 4 GPa. The step of performing the at least one indentation test may be performed in less than approximately three minutes and may provide the load data and the depth data for calculating the area function *A(h)*. The indenter may be a Vickers indenter; wherein the calculating step of the Martens Hardness data *HM* may be calculated by the following:

$$HM=F/26.43h^2$$

The method according to claim 24, wherein the indenter is a Berkovich indenter; wherein the calculating step of the Martens Hardness data *HM* may be calculated by the following:

$$HM=F/26.44h^2$$

The material testing apparatus may be selected from the group of material testing apparatuses consisting of: a scratch testing apparatus, a hardness indentation apparatus, and a wear testing apparatus. The indenter may be selected from the group of indenters consisting of: a Berkovich, a Vickers, a Knoop, a spherical, a cubed corner, and a conico spherical. The indenter may be spherical; wherein the surface of the sample is soft and uniform.

The present specification discloses a new and an improve method for calculating an indenter area function and quantifying a deviation from the ideal shape of an indenter. The method may comprise the steps of: (1) providing a material testing apparatus, an indenter, and a sample; (2) performing one (or very few indentation tests) across a range of loads by applying the indenter to the sample; (3) collecting load data; (4) calculating Martens hardness data; (5) normalizing the depth data and Martens hardness data; and (5) analyzing the load data to detect the amount of deviation in the indenter's area function. Preferably, when applying the indenter to the sample, the loading rate will be performed very slowly at low loads. The loading rate may then accelerate as the load increases. This will generally allow the load application tester to produce repeatable data at low loads and a full range test in a reasonably short time.

It is an object to provide a new and improved method for calculating an indenter area function. The method preferably utilizes a single indention (or possibly a few for averaging) across the full range of loads on a standard sample such as silica. The new method preferably involves the step of recording depth versus load measurements during a full test. As a result, each point generally includes quantifiable data on area versus depth. Because the loading rate may be too quick, preferably, the indentation test is performed very slowly at low loads. The loading rate may then accelerate as the load increases. This preferably allows the operator to acquire sufficient data at low loads and complete a full range test in a reasonable amount of time, preferably less than three minutes.

It is an object to provide a method that provides repeatable data down to six nanometers (nm), which is generally far below conventional methods using the same instrument. Once a depth versus load curve is obtained via the method disclosed herein, this curve is preferably normalized based on the depth results at a load higher than 60 millinewtons (mN) where the diamond is normally of ideal shape. An adjustment factor may be used to account for the Indentation Size Effect (ISE), and the final curve may reflect the indenter area function that can be used during standard indentation tests.

It is an object to provide a new and improved method for calculating an indenter area function quickly, accurately, and efficiently. Preferably, the method allows the operator to save more time in calibrating the indenter and calculating the area function of the indenter. Because the calibration method disclosed herein is preferably quicker than conventional methods, the new method would preferably ensure more accurate data, especially at lower loads.

It is an object to provide a new and improved method for calculating an indenter area function with more accuracy and with repeatability results.

It is an object to provide a new and improved method for calculating an indenter area function to improve quality control, such that quantitative measurements are created and may be used to qualify the integrity of an indenter.

It is an object to provide a new and improved method for quantifying a deviation from an indenter's ideal shape. Based on the indenter area function curve calculated by the new method disclosed herein, one can quickly verify accurately how an indenter area diverts from the perfect, ideal shape or the original shape. Any variation at any depth or combined depth from the original curve may be used to quantify the status of the indenter and may be used as a quantitative way to establish whether the indenter is still fit for testing or needs to be replaced.

It is an object to provide a new and improved method for quantifying a deviation from an indenter's ideal shape utilizing not only Berkovich tips and Vickers tips but also conical spherical tips. Uniform softer materials such as copper, aluminum, or Delrin® are preferably tested rather than fused silica when checking spherical tips.

It is an object to provide a new and improved method for quantifying a deviation from an indenter's ideal shape in order to quantify the quality of a diamond. The new and improve method may help establish the fitness of an indenter for testing.

It is an object to provide a new and quick method for quantifying a deviation from an indenter's ideal shape.

It is another object to overcome the deficiencies of the prior art.

These, as well as other components, steps, features, objects, benefits, and advantages, will now become clear from a review of the following detailed description of illustrative embodiments, of the accompanying drawings, and of the claims.

**BRIEF DESCRIPTION OF THE DRAWINGS**

The drawings show illustrative embodiments, but do not depict all embodiments. Other embodiments may be used in addition to or instead of the illustrative embodiments. Details that may be apparent or unnecessary may be omitted for the purpose of saving space or for more effective illustrations. Some embodiments may be practiced with additional components or steps and/or without some or all components or steps provided in the illustrations. When different drawings contain the same numeral, that numeral refers to the same or similar components or steps.

FIG. 1 is an illustration of a perspective view of one embodiment of a material testing apparatus.
FIG. 2 is a flow chart of one embodiment of the method for calculating an indenter area function.
FIG. 3 is a flow chart of one embodiment of the method for calculating an indenter area function and quantifying a deviation from the ideal shape of an indenter.
FIG. 4 is a flow chart of one embodiment of the method for calculating a first indenter area function $A(h)_1$ and second indenter area function $A(h)_2$ of an indenter.
FIG. 5 is a graph showing the loading rate with load as a function of time according to one embodiment of the method.
FIG. 6 is a graph showing load data as a function of depth according to one embodiment of the method.

**FIG. 7** is a graph showing Marten hardness data as a function of depth according to one embodiment of the method.

**FIG. 8** is a graph showing the calculated area function of the indenter as a function of depth according to one embodiment of the method.

**FIGS. 9A** and **9B** are graphs of the area function of a new indenter and used indenter, respectively, as a function of depth according to one embodiment of the method.

**FIG. 10** is a graph showing the area function as a function of depth for three embodiments of Berkovich indenters.

**FIGS. 11A** and **11B** is a graph, showing the deviation of the area function as a function of depth of one embodiment of a good indenter, and an illustration of an indentation based on that good indenter.

**FIGS. 12A** and **12B** is a graph, showing the deviation of the area function as a function of depth of another embodiment of a good indenter, and an illustration of an indentation based on that good indenter.

**FIGS. 13A** and **13B** is a graph, showing the deviation of the area function as a function of depth of one embodiment of an inadequate and/or used indenter, and an illustration of an indentation based on that inadequate and/or used indenter.

**FIGS. 14A** and **14B** is a graph, showing the deviation of the area function as a function of depth of another embodiment of an inadequate and/or used indenter, and an illustration of an indentation based on that inadequate and/or used indenter.

## DETAILED DESCRIPTION OF ILLUSTRATIVE EMBODIMENTS

In the following detailed description, numerous specific details are set forth in order to provide a thorough understanding of various aspects of one or more embodiments. However, the one or more embodiments may be practiced without some or all of these specific details. In other instances, well-known procedures and/or components have not been described in detail so as not to unnecessarily obscure aspects of the embodiments.

While some embodiments are disclosed herein, still other embodiments will become obvious to those skilled in the art as a result of the following detailed description. These embodiments are capable of modifications of various obvious aspects, all without departing from the spirit and scope of protection. The Figures, and their detailed descriptions, are to be regarded as illustrative in nature and not restrictive. Also, the reference or non-reference to a particular embodiment shall not be interpreted to limit the scope of protection.

In the following description, certain terminology is used to describe certain features of one or more embodiments. For purposes of the specification, unless otherwise specified, the terms "computer" or "computer system", as used herein, refers to any device or machine that processes data or information (*e.g.,* load data, Martens hardness data, load rate) with an integrated circuit chip, including without limitation, personal computers, mainframe computers, workstations, testing equipment, servers, desktop computers, portable computers, laptop computers, embedded computers, wireless devices including cellular phones, personal digital assistants, tablets, tablet computers, smartphones, portable game players, and hand-held computers.

As used herein, the term "material testing apparatus" generally refers to any equipment used for indentation testing, including without limitation, hardness indenter testers, wear testers, and/or scratch testers. The term "indentation testing" refers to act of obtaining measurements with a known indentation apparatus using blunt (spherical or rounded tip) and sharp indenters such as those having cone or pyramidal geometries (*e.g.,* Rockwell, Vickers, Berkovich), by monitoring the penetration of an indenter into a sample or specimen over a range of applied loads.

As used herein, the terms "good indenter" and "ideal indenter" generally refer to any indenter where the deviation from ideal is either correctable or the pattern is predictable with area function, or the indenter does not significantly affect the results for the specific testing done.

As used herein, the terms "inadequate indenter", "bad indenter", "used indenter", or "worn indenter" generally refer to any indenter that is not recommended for material testing due to its non-ideal shape and/or unexpected geometry.

As used herein, the terms "force transducer" and "load sensor" refer to one or more devices or components that determines, measures, or derives a force or load applied to a sample or specimen by an indenter and may include without limitation, force transducers that are resistive (*e.g.,* potentiometers, resistive networks, resistive wires, strain gauges), inductive (linear variable differential transformers (LVDT), variable reluctance transducer), capacitive, piezoelectric, electromagnetic, eletrodynamic force transducers (*e.g.,* load cells, moving coils), magnetoelastic, galvanomagnetic (Hall effect), vibrating wires, (micro)resonators, acoustic, gyroscopic). For example, in one embodiment, a force transducer may be a voltmeter that measures a moving coil and calibrates the resulting load applied to measure load as function of depth. In another embodiment, the force transducer may be a load cell used to create an electrical signal whose magnitude is directly proportional to the force being measured.

As used herein, the terms "determine" and "determining" refer to the act of measuring, deriving, and/or obtaining information or data (*e.g.,* load data, load rate data, depth data). For example, if the force transducer determines a force or load applied to a sample or specimen via an indenter, that force transducer may measure and/or derive the force or load applied to that sample or specimen.

As used herein, the term "displacement sensor" refers to one or more devices or components that measure penetration depth of an indenter. The displacement sensor may convert a displacement, velocity, or acceleration into an electrical signal, and may include without limitation, capacitive sensors (*e.g.,* capacitor rings), axial chromatism sensors, inductive sensors (including eddy current sensors), differential transformers, (*e.g.,* LVDT), variable inductance, optical interferometry, optical deflection detectors, strain gages, piezo sensors, magnetostrictive and electrostrictive sensors.

As used herein, the term "actuator" refers to one or more devices that convert input signals into physical motion, including piezoelectric elements (*e.g.,* piezo activated flexures, piezo stacks, piezo tubes), linear motors, electrostatic motors, force coils, bimorphs, blocks, capacitive motors, voice coil actuators, and magnetostrictive actuators.

As used herein, the terms "approximately" and "about" generally refer to a deviance of within 5% of the indicated number or range of numbers. In one embodiment, the term "approximately" and "about", refer to a deviance of between 1-10% from the indicated number or range of numbers.

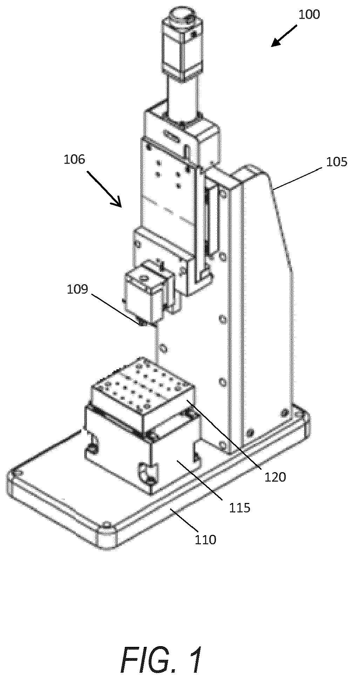

**FIG. 1** is an illustration of a perspective view of one embodiment of a material testing apparatus. As shown in FIG. 1, one embodiment of the material testing apparatus **100** may comprise: a frame **105,** base **110,** a table **115,** and a stage **120.** The frame **105** is generally any structural support (*e.g.,* mounting frame) that may be used to house and protect the inner components of the material testing apparatus **100.** The base **110** is generally any structural support that provides mounting for the frame **105** and main components of the material testing apparatus **100.** The table **115** or stage may be any component used to help hold, position, and/or secure a sample or specimen for indentation testing. The sample may be secured on the table **115** and/or stage **120** via fasteners such as clamps or brackets, and the stage **120** may be moved along an axis or grid for positioning the sample. The material testing apparatus **100** may be any type of indenting-type testing apparatus such as hardness indenter tester, wear tester, and/or scratch tester.

The frame **105** may comprise an indenter module assembly **106,** which, in turn, may comprise a force transducer, displacement sensor, and indenter **109.** In various embodiments, the force transducer, displacement sensor, and indenter may be housed altogether. In other embodiments, the force transducer, displacement sensor, and indenter may be separated in other areas of the material testing apparatus **100.** The force transducer generally provides precision measuring of a load applied onto a surface of the sample and may be configured to be used in a wide variety of loads. In one embodiment, the force transducer may be a load cell, which comprises an ultra-low capacity load cell and bracket. The indenter **109** is preferably configured to apply a load onto the surface of a sample, and may be coupled to the force transducer, such that the indenter **109** is positioned above the top surface of the sample. The displacement sensor may be mounted within the indenter module assembly **106,** table **115,** stage **120,** or within the frame **105,** and is preferably configured to measure displacement of the indenter **109** carried by the indenter module assembly **106,** relative to the surface of the sample. In one embodiment, the displacement sensor may comprise capacitor rings that measure the vertical displacement of the shaft or indenter. Specifically, the displacement sensor may comprise two rings, one of which is attached to the moving frame and the other attached to the shaft holding the indenter **109.** As the shaft moves in relation to the frame, the variation of the distance between the two rings or plates provides depth displacement.

In an alternative embodiment, the displacement sensor may comprise axial chromatism sensors. For example, in Axial Chromatism technology, height may be measured directly from the detection of the wavelength that hits the surface of the sample in focus. A white light sensor may be used to split the light into various wavelengths in the vertical direction, wherein each wavelength is associated with a specific displacement calibration. When a particular wavelength is in focus on the surface of the sample, that wavelength is preferably reflected with the highest intensity, and the corresponding depth change may be recorded accurately.

In another embodiment, the displacement sensor may comprise a linear variable differential transformer (LVDT), which is an electro-mechanical transducer used to measure position or displacement. The LVDT is preferably coupled mechanically into the material testing apparatus **100** and may provide a corresponding electrical signal or feedback signal relating to the physical position of the indenter.

In another embodiment, the displacement sensor may comprise a linear encoder, which may be a sensor or transducer paired with a scale that encodes position. The sensor may read the scale in order to convert the encoded position into an analog or digital signal, and that signal can then be decoded into position by a digital readout or motion controller.

In various embodiments, the indenter module assembly **106** may also comprise an actuator or driving mechanism, which may be any device that converts input signals into physical motion, including without limitation, piezoelectric elements (*e.g.,* piezo activated flexures, piezo stacks, piezo tubes), linear motors, electrostatic motors, force coils, bimorphs, blocks, capacitive motors, voice coil actuators, and magnetostrictive actuators. In one embodiment, the actuator or driving mechanism may comprise, for instance, a piezoelectric element or force coil to drive the indenter into the surface of the sample. In other embodiments, the material testing apparatus **100** may instead comprise a servo or linear motor, which may be used for accurately applying load and controlling the applied load against a sample. Reduction gears may also be implemented to reduce the speed of the indenter **109** by minimizing the power transferred to the indenter **109.**

In various embodiments, a computer system may also be coupled to the material testing apparatus **100** and may control testing and acquire test data of the material testing apparatus **100.** In one embodiment, the computer system may comprise a processor, memory (*e.g.,* random access memory (RAM), read only memory (ROM)) and data storage units (*e.g.,* hard drive). The processor is generally configured to execute one or more programs that are stored in the ROM and/or RAM and may perform control functions of the material testing apparatus **100.** In one embodiment, programs that control the material testing apparatus **100** (*e.g.,* programs that measure and record indentation depth, deformation, height position of the indenter, calibration, and the like) may also be stored in the storage area. Finally, in other embodiments, the computer system may also comprise an interface unit coupled between the computer system and material testing apparatus **100** for converting electrical signals between the material testing apparatus **100** and the computer system.

When in use, the material testing apparatus **100** may be configured to receive a sample for indentation testing. A sample may be loaded onto the stage **120** or table **115,** and an indenter **109** is generally pressed onto the surface of the sample. The indenter module assembly **106** generally applies a load to the sample through the indenter **109,** and the displacement sensor may measure the penetration depth of the indenter. The displacement sensor may, for example, measure the vertical displacement of the tip of the indenter, and thus, acquire penetration depth measurements of the sample. The force transducer may also monitor and measure the loading rate of the applied loads $F$ used against the indenter and sample. While performing the indentation tests, the material testing apparatus **100** may record the load data, which may comprise applied load data and loading rate data, and depth data. In various embodiments, the material testing apparatus **100** may have an intrinsic compliance measures that are taken in account in a software application to provide an adjusted depth.

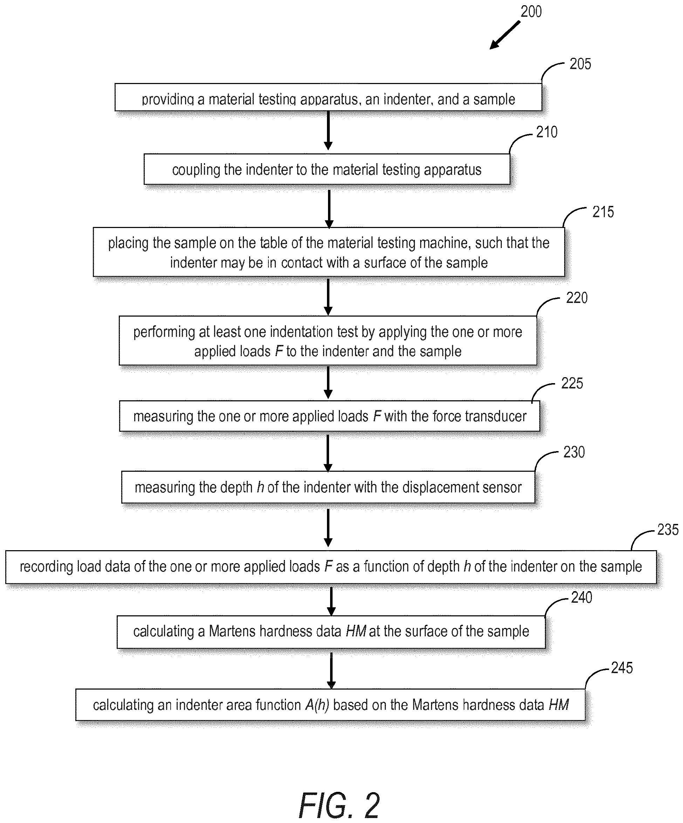

FIG. 2 is a flow chart of one embodiment of the method for calculating an indenter area function. As shown in FIG. 2, one embodiment of the method **200** for calculating an indenter area function may comprise the steps: **205, 210, 215, 220, 225, 230, 235, 240,** and **245.** In the first step **205,** the operator of the method **200** may first provide the material testing apparatus **100,** indenter **109,** and sample. As discussed above, the material testing apparatus **100** may be any testing machine that utilizes an indenter, which generally includes scratch testing machines, hardness indentation machines (*e.g.,* nano-indentation machines), and wear testing machines. One embodiment of a material testing apparatus **100** may be a hardness testing machine, as shown in FIG. 1. The indenter **109** may be any type of small hard object used for producing an indentation on a solid sample in an indentation test. Examples of such indenters may include, without limitation, three/four sided pyramids, wedges, cones, cylinders, filaments, spheres, Berkovich, cube corner, Vickers, and Knoop, and a conico spherical indenters. The sample being tested may be any solid material used for material testing and may include, but not limited to: silicon, tungsten, iron, titanium, copper, tantalum, tin, zinc, nickel, silver, gold, aluminum, lead, steel, alloy, acrylic, polymer, cast iron, brass, glass, carbon fiber, rubber, and graphene. In a preferred embodiment, the sample may be a standardization sample such as silica. Alternatively, for certain indenters such as spherical indenters, softer and smoother materials with a uniform surface such as copper or Delrin®, an acetal homopolymer aluminum, are preferably used.

Regarding steps **210** and **215,** the operator generally installs the indenter **109** to the material testing apparatus **100.** The indenter **109** may be installed or coupled to the material testing apparatus **100** in various ways such as mounting, fastening (*e.g.,* threaded screw) and/or grip. An adaptor may also be used to assist with the coupling of the indenter to the material testing apparatus **100,** and, once the indenter is installed, the operator may then place the sample or tested specimen onto the table **115** or stage **120** of the material testing apparatus **100.** The table **115** may comprise a movable stage **120** for horizontal movement of the sample, or the sample may be fixed at a single location. Preferably, the sample is positioned on the table **115** of the material testing apparatus **100,** such that the indenter **109** may be in contact with the surface of the sample, as shown in step **215.**

After the indenter **109** and sample are ready for testing, the operator may perform step **220,** which is conducting at least one indentation test on the sample. The operator may perform a single indentation test on the sample across a range of loads or very few indentation tests for averaging the test data. When performing the indentation test, the operator preferably applies the load(s) very slowly at low loads. For example, in one embodiment, the loading rate may increase between approximately 0 to 5 mN for approximately two minutes or less. The loading rate may also gradually increase until the loading rate reaches the maximum load. For instance, in one embodiment the loading rate may increase between approximately 10 to 60 mN in approximately 20 seconds. Preferably, the method **200** is performed in less than three minutes, which saves time in calibrating the indenter, as compared to current calibration methods, which are time consuming. Although the method **200** shows a single indentation test performed, it should be understood that multiple indentations (preferably only a few), might be performed and averaged across a range of loads for more accurate measurements.

Turning to steps **225** and **230,** the material testing apparatus **100** preferably measures the applied load(s) $F$ on the sample and *depth h* of the indenter **109.** The material testing apparatus **100** may also determine the loading rate. As discussed above, the force transducer of the material testing apparatus **100** preferably determines, measures, and/or derives the force or applied load(s) of which the indenter applies to the sample during loading. The displacement sensor preferably determines or measures the depth $h$ or penetration depth of the indenter **109** into the sample. While measuring the loading rate, applied load(s) $F$, and *depth h* of the indenter, the material testing apparatus **100** preferably records the load data of the applied loads $F$, which includes the applied loads and loading rate, as shown in step **235**. In one embodiment, the material testing apparatus **100** preferably records and plots the applied loads $F$ as a function of depth $h$ of the indenter on the sample. Measurements may be taken and recorded at every unit of time and/or depth, and it is preferred that numerous measurements be recorded in order to accurately calculate the area function of the indenter. For instance, in one embodiment involving material testing apparatuses with nano-indentation, load data may be acquired at a rate of 50 kilohertz (Khz), and every 10,000 data points may be averaged into a single data point to create an effective acquisition rate of 5 Hertz (Hz). On the other hand, in other embodiments, the load data acquired from other indentation equipment may be acquired at a lower acquisition rate approximately between 10 to 20 Hz. In additional embodiments, the indentation equipment may acquire load data at a higher acquisition rate and higher load rate.

In step **240,** a Martens hardness data *HM* may then be calculated, which generally describes the plastic/elastic properties of a material. The Martens hardness *HM* may be defined as the test force $F$ divided by the surface area $A_s(h)$ of the indenter penetrating the surface of the sample. The *HM* may be plotted as a force/indentation depth curve that increases under a test force, preferably after reaching and holding the specified maximum force. The Martens hardness *HM* is preferably calculated at each point of the load versus depth curve and is generally dependent upon the type of indenter used due to the surface area of the indenter. For example, when utilizing a Vickers indenter, *HM* may be calculated by the following equation:

$$HM = F/26.43h^2$$

where F is the applied load or test force and $h$ is the depth of the indenter. On the other hand, when utilizing a Berkovich indenter, *HM* may be calculated by the following equation:

$$HM = F/26.44h^2$$

where $F$ is the applied load or test force and $h$ is the depth of the indenter. Once calculated, the Martens hardness *HM* may be plotted as a function of depth and may be normalized at each point using the average *HM* value. The normalization may be expressed in various depths, but preferably reaches a depth that provides a better understanding of the indenter area function. For example, in embodiments involving Berkovich, Vickers, or cubic corner indenters, one embodiment of the method may involve normalizing the data points up to a depth of approximately 850 nm. The average value of *HM* for these indenters may also be obtained from data points between approximately 75 mN and 85 mN, where the geometrical shape of the indenter is ideal or perfect.

It is important to note that normalization of depth, load, and/or hardness values is generally dependent upon the type of indenter and type of material sample. For example, normalized depth values for Berkovich, Vickers, and cubic corner indenters generally differ from the normalized depth values of spherical tip indenters due to the spherical tip indenter's radius and workable range. Additionally, normalized depth values may also be reached at a much lower load for softer samples such as copper or Delrin®.

Finally, turning to step **245,** the method **200** may involve the step of calculating the indenter area function $A(h)$ based on the Martens hardness data *HM.* The area function $A(h)$ is preferably the cross-sectional area of the indenter **109** at any depth $h$ from its apex and is generally calculated by the following equation:

$$A(h) = c_0h^2 + c_1h + c_2h^{1/2} + c_3h^{1/4} + c_4h^{1/8} + c_5h^{1/16} + c_6h^{1/32} + c_7h^{1/64} + c_8h^{1/128}$$

Generally, the area function varies depending upon the type of indenter. For example, the area function for an ideal Berkovich indenter is preferably:

$$A(h) = 24.56h^2 + c_1h + c_2h^{1/2} + c_3h^{1/4} + c_4h^{1/8} + c_5h^{1/16} + c_6h^{1/32} + c_7h^{1/64} + c_8h^{1/128}$$

The area function for an ideal Vickers indenter is preferably:

$$A(h) = 24.504h^2 + c_1h + c_2h^{1/2} + c_3h^{1/4} + c_4h^{1/8} + c_5h^{1/16} + c_6h^{1/32} + c_7h^{1/64} + c_8h^{1/128}$$

The area function for an ideal Knoop indenter is preferably:

$$A(h)=108.21h^2+c_1h+c_2h^{1/2}+c_3h^{1/4}+c_4h^{1/8}+c_5h^{1/16}+c_6h^{1/32}+c_7h^{1/64}+c_8h^{1/128}$$

The area function for an ideal cube indenter is preferably:

$$A(h)=2.6h^2+c_1h+c_2h^{1/2}+c_3h^{1/4}+c_4h^{1/8}+c_5h^{1/16}+c_6h^{1/32}+c_7h^{1/64}+c_8h^{1/128}$$

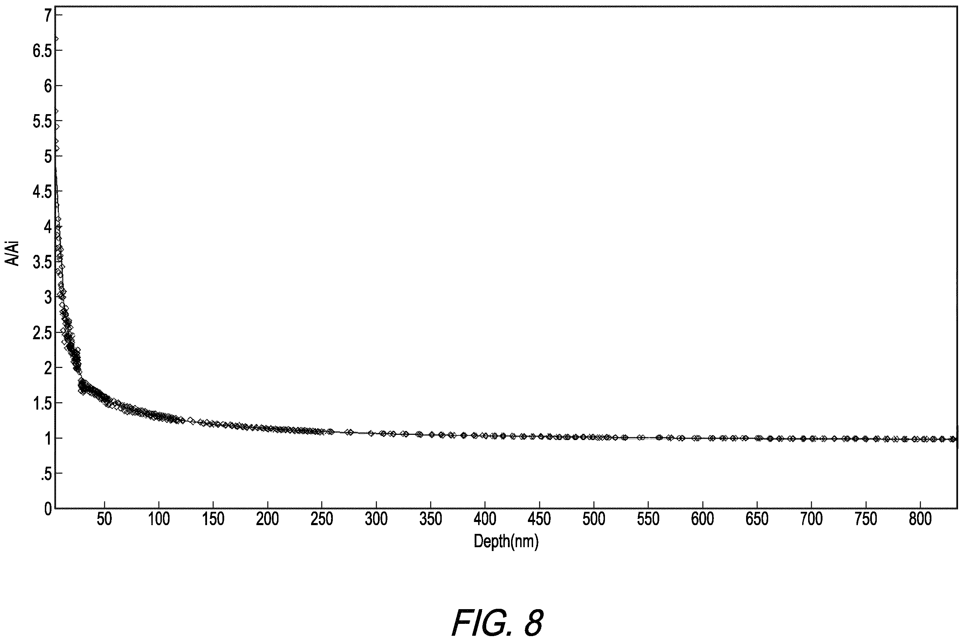

where $c_1$, $c_2$, $c_3$, ..., and $c_8$ are coefficients that depends upon the bluntness of the indenter. Thus, once the Martens hardness data $HM$ has been calculated and normalized per step **240,** the calculated area function of the indenter is preferably re-plotted as the calculated area function $A/A_i$ with a function of depth $h$ in accordance with ASTM E2546, and as shown in FIG. 8, where $A_i$ is the ideal area and $A$ is the actual area of the indenter. In an alternative embodiment, the calculated area function may be shown or expressed via a lookup table. After obtaining the calculated area function, the operator or user may use the data to extract other properties of the specimen material such as elastic modulus $E$ and hardness.

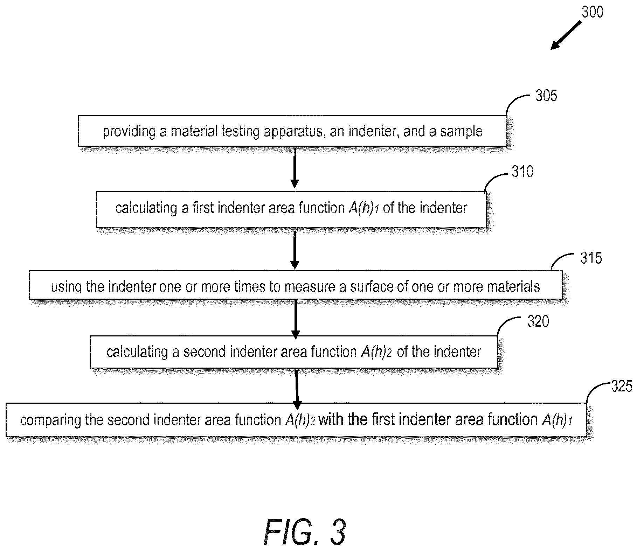

**FIG. 3** is a flow chart of one embodiment of the method for calculating an indenter area function and quantifying a deviation from the ideal shape of an indenter. As shown in FIG. 3, one embodiment of the method **300** may comprise the steps: **305, 310, 315, 320,** and **325.** FIG. 3 shows that the method **300** may employ the same steps as the method **200** (shown in FIG. 2) for calculating an indenter area function $A(h)$ above with the exception of the additional steps **310** and **325.** Specifically, step **310** of the method **300** may comprise the step of having the operator ascertain/calculate a first indenter area function $A(h)_1$ of the indenter, which may be the area function of a new indenter or the area function of the indenter at some other reference point. Based on the first indenter area function $A(h)_1$, the operator may compare the second indenter area function $A(h)_2$ with the first indenter area function $A(h)_1$ per step **325.**

Turning to the first step **305** of method **300,** the operator may first provide the material testing apparatus **100,** indenter **109,** and sample. As described in more detail above, the material testing apparatus **100** is generally any indent-type testing machine that utilizes an indenter (*e.g.,* Berkovich, Vickers). The sample may be any solid material used for material testing and preferably comprises a smooth surface. For spherical indenters, softer samples with a uniform surface are preferably used.

Next, according to step **310,** the first area function $A(h)_1$ or reference area function $A(h)_1$ is preferably obtained. The first area function $A(h)_1$ is generally ascertained through various methods such as indentation testing, indirect calibration, or the like. For example, original area function $A(h)_1$ may be obtained from a previous indentation test and may be used as a reference point of deviation for the method **300**. In one embodiment, the operator may perform steps: **205, 210, 215, 220, 225, 230, 235, 240,** and **245,** described above to obtain the first area function $A(h)_1$.

Turning to step **315,** after obtaining or calculating the first area function $A(h)_1$ from the indenter, the operator now has a reference point to use for comparison for an area function measured later (*i.e.,* $A(h)_2$). Thus, the indenter **109** may now be used for other material testing applications such as scratch testing, wear testing, hardness testing, and the like. Measurements from these tests may also be used to extract other data such as load, loading rate, depth, and hardness.

Turning to step **320,** the method **300** preferably includes the step of calculating the second indenter area function $A(h)_2$. The second indenter area function $A(h)_2$ is preferably the new area function measured that shows the deviation from the first indenter area function $A(h)_1$ or original area function. Preferably, the second indenter area function $A(h)_2$ is obtained using the same indenter and same standard sample or material. Once $A(h)_2$ is obtained, the calculated area function of the indenter is preferably replotted as the calculated area function $A/A_i$ as a function of depth $h$, where $A_i$ is the ideal area and $A$ is the actual area of the indenter.

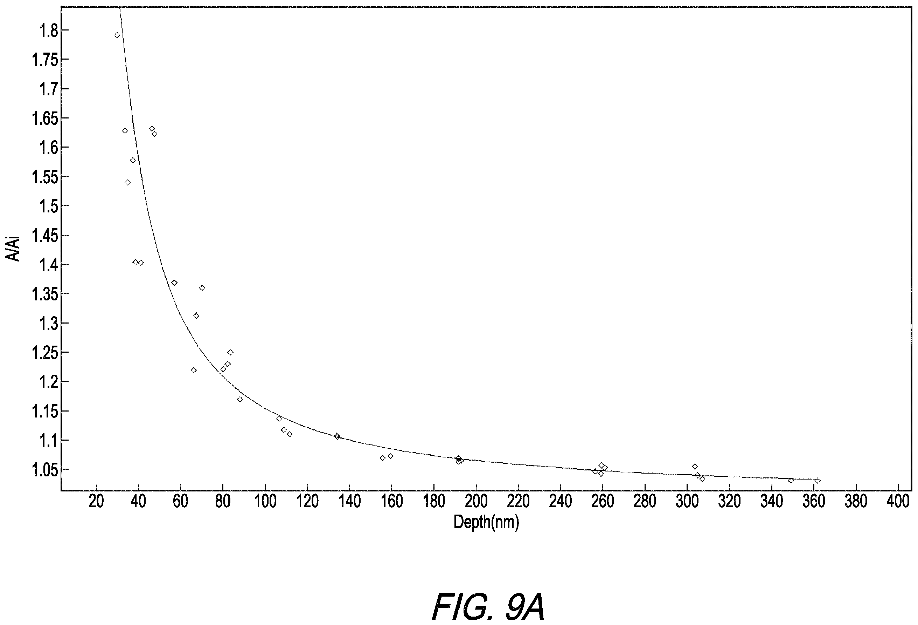

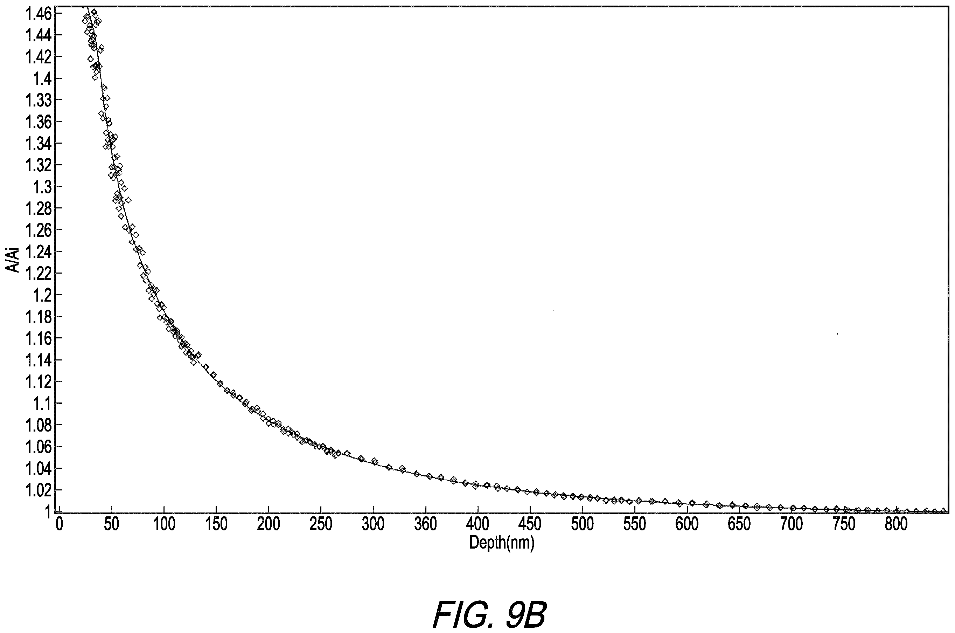

Finally, according to step **325,** after obtaining the new indenter area function $A(h)_2$, the new indenter area function $A(h)_2$ is then preferably compared to the original area function $A(h)_1$ when the indenter was new or used at any point or chosen reference. Any deviation in terms of change at a specific depth $h$ or any other means to quantify variation from original curve of $A(h)_1$ would likely help provide a quantifiable way to illustrate how much the indenter **109** has diverted from its original shape or perfect shape. Additionally, any variation at any *depth h* or combined depth from the original curve may be used to quantify the status of the indenter and may be used as a way to see whether the indenter is still fit for testing or whether the indenter needs to be replaced. It should be understood that various geometries of indenters and various testing methods (*e.g.,* hardness testing, scratch testing, wear testing) may be used for this method **300.** The curves of both area functions would be similar to the curves shown in **FIGS. 9A** and **9B.**

Regarding blunt geometrical tips such as those from a spherical indenter, it is preferable to use softer samples with a uniform surface as the reference material (*e.g.,* aluminum, copper, Delrin®). This would help minimize any possible cracking which would affect the results. This verification of the status of indenter is important in indentation, scratch and wear applications.

In various embodiments, the fitness of an indenter can also be quantified by comparing the Martens hardness data *HM*. Specifically, rather than comparing a first area function $A(h)_1$ and second area function $A(h)_2$ of an indenter, the Martens hardness *HM* data obtained when calculating for a first area function $A(h)_1$ may be compared with the new Martens hardness *HM* data. In other words, the operator may perform steps **205, 210, 215, 220, 225, 230, 235, 240,** and **245** to obtain a first or original Martens hardness data $HM_1$ and compare the variation between that Martens hardness $HM_1$ values with the new Marten hardness $HM_2$ values obtained via steps **205, 210, 215, 220, 225, 230, 235, 240,** and **245** performed again later on the same indenter **109**.

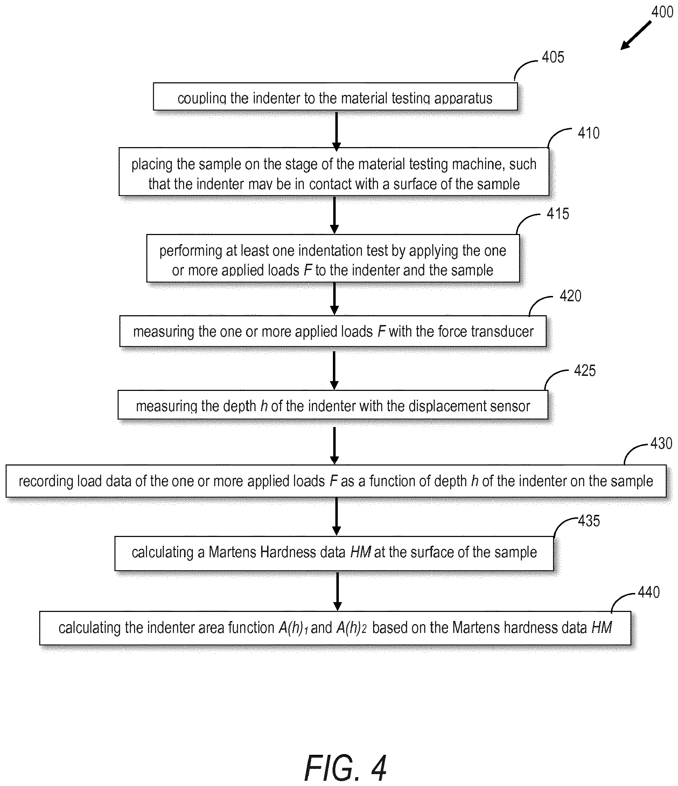

FIG. 4 is a flow chart of one embodiment of the method for calculating a first indenter area function $A(h)_1$ and second indenter area function $A(h)_2$ of an indenter. As shown in FIG. 4, one embodiment of the method **400** may comprise the steps: **405, 410, 415, 420, 425, 430, 435,** and **440**. Steps **405** and **410** show that the operator preferably installs both the indenter **109** and sample to the material testing apparatus **100**. Specifically, the operator may install the indenter **109** to the material testing apparatus **100** via mounts, fasteners, or the like and may utilize an adaptor to assist with the installation of the indenter **109** to the material testing apparatus **100**. The operator may then place and position the sample on the material testing apparatus **100** for testing. Preferably, the sample is positioned on the table **115** or stage **120** of the material testing apparatus **100,** such that the indenter **109** may be in contact with the surface of the sample, as shown in step **410**.

After the indenter **109** and sample are prepared for indentation testing, the operator may perform one or few indentation test(s) on the sample, as shown in step **415**. The operator may perform a single indentation test on the sample across a range of loads or may perform a few indentation tests for averaging. During the indentation tests, the operator preferably applies the increasing load(s) very slowly at low loads. For instance, the loading rate may increase between approximately 10 to 60 mN in approximately 20 seconds. Preferably, the method **400** is performed in less than three minutes to help preserve calibration time.

Referring to steps **420** and **425,** the material testing apparatus **100** preferably measures the loading rate, applied load(s) *F,* and *depth h* of the indenter **109**. In particular, the force transducer may determine, measure, and/or derive the applied load(s) at which the indenter applies to the sample when loading, and the displacement sensor may determine or measure the penetration depth *h* of the indenter **109** into the sample. While monitoring, the material testing apparatus **100** may record the load data, which generally includes the applied loads *F* and loading rate, as shown in step **430**. For example, in one embodiment, the material testing apparatus **100** preferably records and plots the applied loads *F* as a function of depth *h* of the indenter on the sample.

In step **435**, a Martens hardness data *HM* may then be calculated. As discussed above, the Martens hardness *HM* is preferably calculated at each point of the load versus depth curve and may be calculated previously when trying to ascertain the original indenter area function $A(h)_1$ in step **310** of method **300.** In other words, two Martens hardness data may be obtained - *i.e.,* a first Martens hardness data $HM_1$ when calculating for the first or original area function $A(h)_1$ and the second Martens hardness data $HM_2$ when calculating for the second or new area function $A(h)_2$. Importantly, the Martens hardness *HM* is generally dependent upon the type of indenter used due to the surface area of the indenter. For example, Martens hardness of a Vickers indenter may be calculated by the following:

$$HM = F/26.43h^2$$

where *F* is the applied load or test force and *h* is the depth of the indenter. Calculating Martens hardness of a Berkovich indenter may be performed by the following equation:

$$HM = F/26.44h^2$$

where *F* is the applied load or test force and *h* is the depth of the indenter. Once calculated, the Martens hardness *HM* may be plotted as a function of depth and may be normalized at each point using the average *HM* value. The average value of *HM* is preferably obtained from data between approximately 75 mN and 85 mN for Berkovich and Vickers indenters, where the geometrical shape of the indenter is ideal or perfect.

Finally, turning to step **440,** the method **300** preferably includes the step of calculating the first and second indenter area functions $A(h)_1$ and $A(h)_2$ based on the first and second Martens hardness data $HM_1$ and $HM_2$ of that indenter. As discussed above, the second indenter area function $A(h)_2$ is preferably the new area function that shows the deviation from the first indenter area function $A(h)_1$ or original area function. Once $A(h)_2$ is obtained, the calculated area function of the indenter is preferably replotted as the calculated area function $A/A_i$ as a function of depth *h*, where

$A_i$ is the ideal area and $A$ is the actual area of the indenter. Once the new indenter area function $A(h)_2$ and original area function $A(h)_1$ are obtained, the new indenter area function $A(h)_2$ may then be compared to the original area function $A(h)_1$ when the indenter was new or used at any point or chosen reference. Any deviation in terms of change at a specific depth $h$ or any other means to quantify variation from original curve of $A(h)_1$ would likely help provide a quantifiable way to illustrate how much the indenter **109** has diverted from its original shape or perfect shape. Additionally, any variation at any *depth h* or combined depth from the original curve may be used to quantify the status of the indenter may be used as a way to see if the indenter is still fit for testing or whether the indenter needs to be replaced.

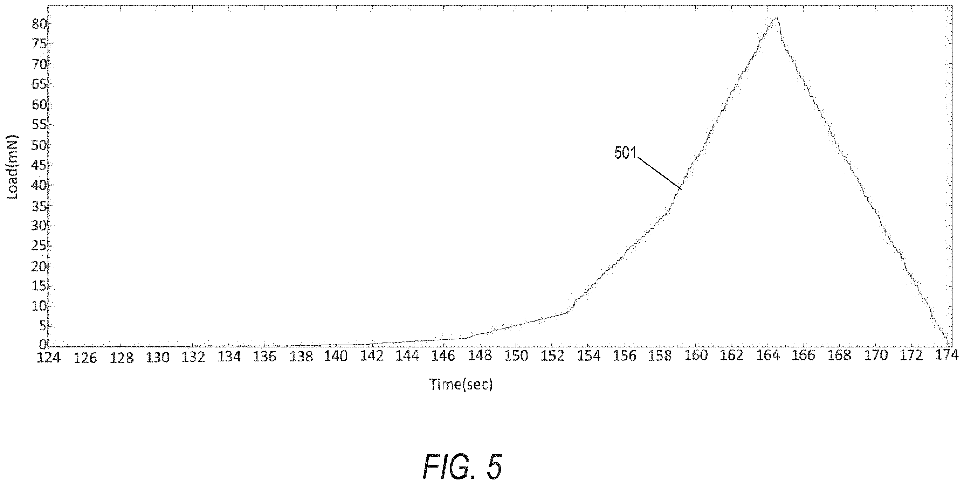

**FIG. 5** is a graph showing the loading rate as a function of time according to one embodiment of the method. As shown in FIG. 5, the curve **501** showing loading rate as a function of time of the methods **200, 300, 400** may involve performing an indentation test across a range of loads. In particular, the loads may gradually increase very slowly at low loads, as shown in the first portion of the curve **501,** and later accelerate at a maximum load. For example, in one embodiment using a Berkovich indenter on fused silica, the loading rate may increase from 0 to 5mN between 0 and 146 seconds and then accelerate from 5 to 80mN between 146 and 164 seconds. In particular, the acceleration of the loading rate may increase as follows: (1) up to 0.2 mN at a loading rate of 1 mN/minute (min); (2) up to 0.5 mN at a loading rate of 4mN/min; (3) up to 2 mN at a loading rate of 16 mN/min; (4) up to 8 mN at a loading rate of 64 mN/min; (5) up to 32 mN at a loading rate of 256 mN/min; and (6) up to 80 mN at a loading rate of 480 mN/min. In this embodiment, the total time for the testing may be approximately three minutes. Although the above embodiment of the method is generally used on Berkovich indenter on silica, it should be understood that the acceleration of the loading rate may vary, especially when used with softer materials and/or with spherical tips. For example, indenters with spherical tips generally have a range of loads that vary, depending on the diameter of the tip - *i.e.,* the larger the tip, the higher the load.

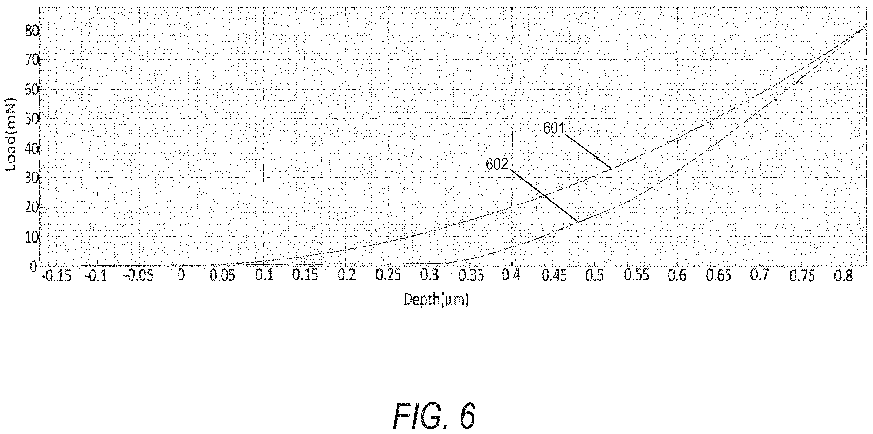

**FIG. 6** is a graph showing load data as a function of depth according to one embodiment of the method. As shown in FIG. 6, one embodiment of the method **200, 300, 400** may include calculating a loading curve **601** and an unloading curve **602,** which may be plotted as load data as a function of depth. FIG. 6 shows that, during the loading phase where the applied load increases from 0 to 80mN, the depth increases from 0 to approximately 8 nm. However, during the unloading phase, the applied load decreases from 80 to 0 mN.

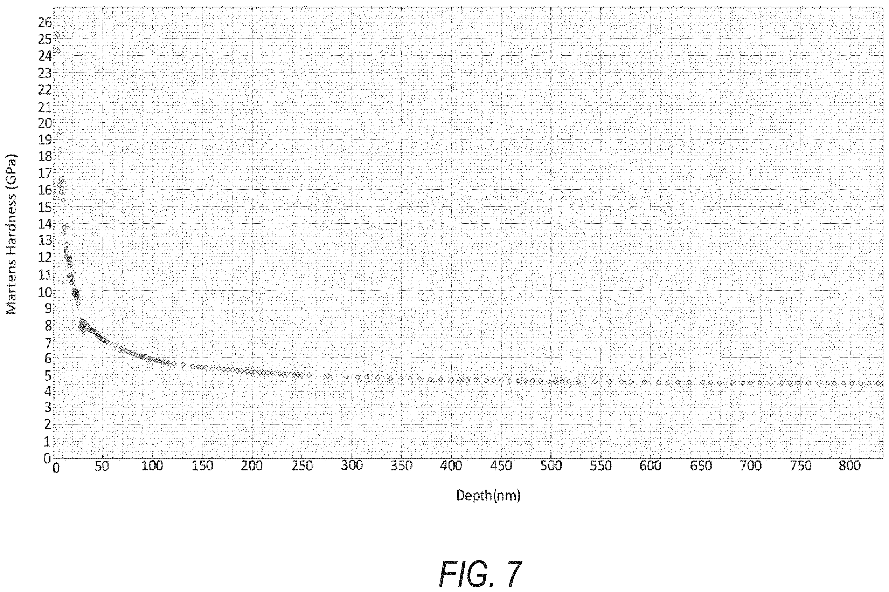

**FIG. 7** is a graph showing Marten hardness data as a function of depth according to one embodiment of the method. As shown in FIG. 7, one embodiment of the methods **200, 300, 400** may comprise the step of plotting the Martens hardness data $HM$ in gigapascals (GPa) as a function of depth $h$ in nm. Between 0 and 50 nm, much of the displacement of $HM$ is shown. This displacement may be used to calculate the contact surface area, based on the indenter's geometry.

**FIG. 8** is a graph showing the calculated area function of the indenter as a function of depth according to one embodiment of the method. After the Martens hardness $HM$ data is plotted, the $HM$ data is preferably normalized. Specifically, an overall normalization may be obtained at every data point using the average $HM.$ For example, in embodiments involving Berkovich, Vickers, or cubic corner indenters, an overall normalization may be obtained at data points using the average $HM$ values obtained from data between 75mN and 85mN where the shape of the indenters are expected to be perfect. These values, however, will likely vary for spherical tip indenters (due to its radius and workable range) and/or different material samples. After the area function $A(h)$ is calculated and the $HM$ data normalized, all the points in the curve are recalculated and re-plotted as the calculated area function $A/A_i$ with respect to depth $h$, as shown in FIG. 8, where $Ai$ is the ideal area of the indenter and A is the actual area of the indenter.

**FIGS. 9A** and **9B** are graphs of the area function of a new indenter and used indenter, respectively, as a function of depth according to one embodiment of the method. FIG. 9A shows one embodiment of the calculated area function for a used indenter, and FIG. 9B shows one embodiment of the calculated area for a new indenter. By comparing the curves shown in FIGS. 9A and 9B, the operator may visualize and/or quantify the deviation between the old indenter and new indenter. Specifically, the operator may select one or more point at both curves for the new indenter and old indenter and measure the deviation or difference between the two graphs. For example, FIG. 9A shows that, at a depth of 110 nm, the calculated area function $A(h)_1$ for the first curve is approximately 1.13, whereas FIG. 9B shows that, at the same depth of 110 nm, the calculated area function $A(h)_2$ for the second curve is approximately 1.18. Because the deviation is the measured difference between the two curves, the deviation at 110 nm is approximately 0.05. This methodology may be applied across additional points of both curves in order to accurately quantify the deviation between the old indenter and new indenter.

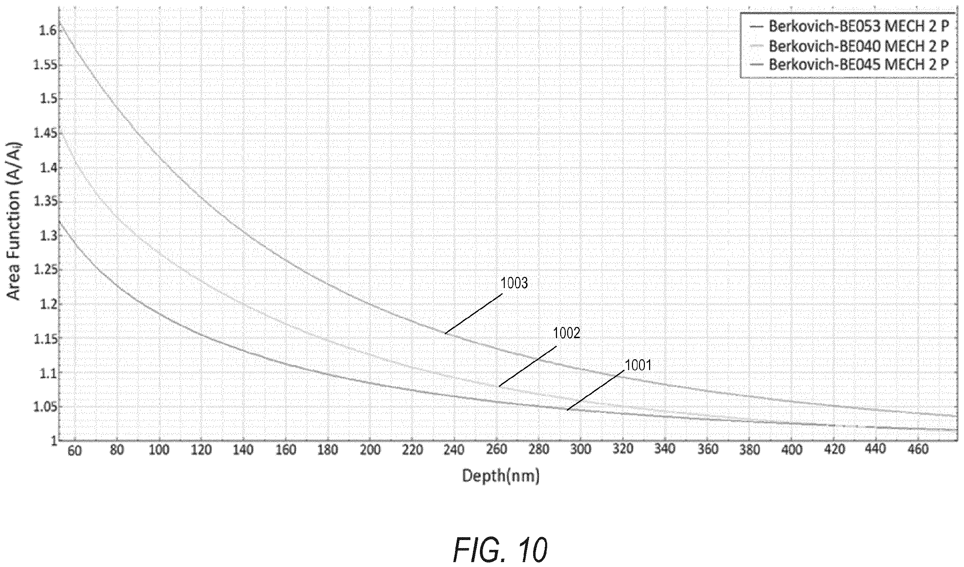

**FIG. 10** is a graph showing the area function as a function of depth for three embodiments of Berkovich indenters. As shown in FIG. 10, the first Berkovich indenter may be represented by curve **1001;** the second Berkovich indenter may be represented by curve **1002;** and the third Berkovich indenter may be represented by curve **1003.** Based on the deviation away from area function value of "1" (*i.e.,* the area function for an ideal indenter), the larger the deviation from value 1 at a certain depth, the less ideal the indenter is. Here, at a depth of 1 nm, the first Berkovich indenter represented by curve **1001** has an area function $A(h)$ of 1.33 and is considered the best indenter while the second Berkovich indenter represented by curve **1002** has an area function $A(h)$ of 1.46 and thus is less than ideal. The third Berkovich indenter represented by curve **1003** has an area function $A(h)$ of 1.62 and is considered the least desirable indenter out of the three Berkovich indenters.

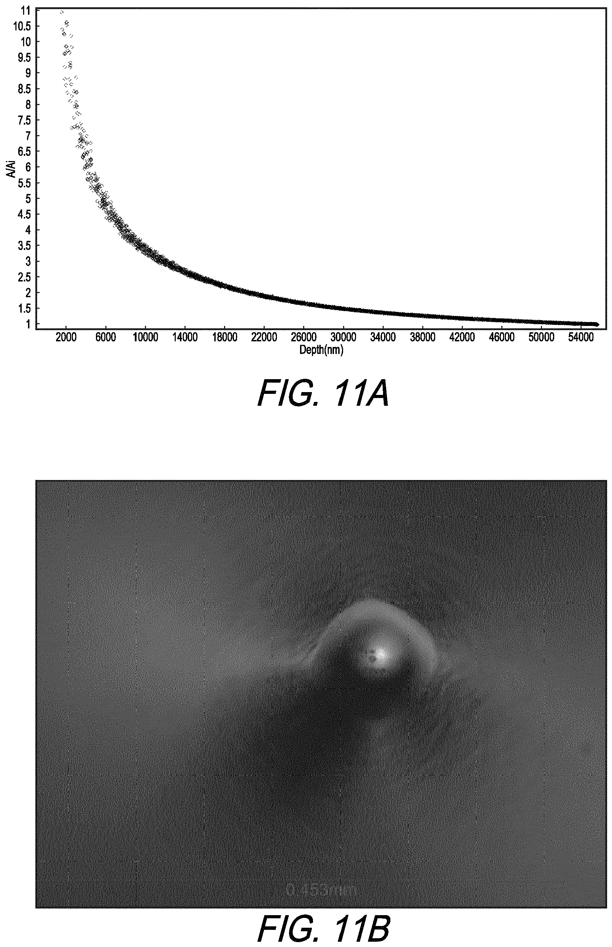

**FIGS. 11A** and **11B** is a graph, showing the deviation of the area function as a function of depth of one embodiment of a good indenter, and an illustration of an indentation based on that good indenter. Specifically, FIGS. 11A and 11B show the results of an indentation by one embodiment of a Rockwell® spherical-conical tip with a radius of 100 micrometers ($\mu$m) on Delrin® (*i.e.,* indenter #A), which is the sample or specimen. As discussed above, the deviation at any points may be used to establish whether an indenter is defective and may also be used to identify the quality of the indenter. Here, FIGS. 11A and 11B show that the points of the curve illustrated match closely at all depths. For example, the area function of indenter# A at a depth of 4 $\mu$m is 6.4, and the area function at a depth of 14 $\mu$m is 2.7. These values are close and within the normalize range of the area function of an ideal indenter, and thus, this indenter is considered to be a good indenter.

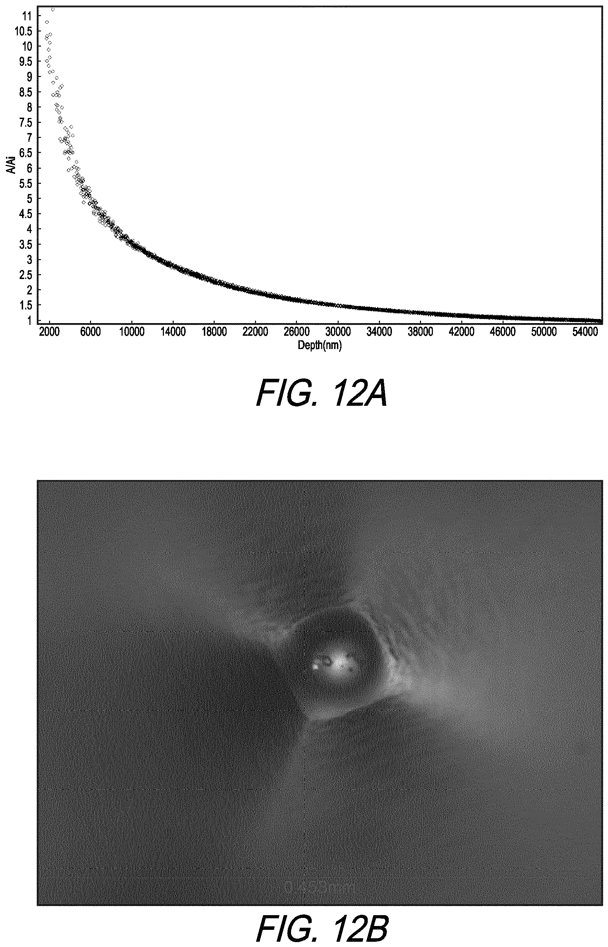

**FIGS. 12A** and **12B** is a graph, showing the deviation of the area function as a function of depth of another embodiment of a good indenter, and an illustration of an indentation based on that good indenter. Specifically, FIGS. 12A and 12B show the results of an indentation by another embodiment of a Rockwell® spherical-conical tip with a radius of 100 $\mu$m on Delrin®, an acetal polymer (*i.e.,* indenter #B), which is the sample or specimen. As discussed above, the deviation at any points may be used to establish whether an indenter is defective and may also be used to identify the quality of the indenter. Here, FIGS. 12A and 12B show that the points of the curve illustrated match closely at all depths. For example, the area function of indenter# B at a depth of 4 $\mu$m is 6.5, and the area function at a depth of 14 $\mu$m is 2.8. These values are close and within the normalize range of the area function of an ideal indenter, and thus, this indenter is considered to be a good indenter.

**Table 1**

|  | Value at 4 $\mu$m | Value at 14 $\mu$m |
|---|---|---|
| Good Indenter #A | 6.4 | 2.7 |
| Good Indenter #B | 6.5 | 2.8 |

Because the area function matches closely at all depths, indenters #A and #B are thus considered to be good indenters.

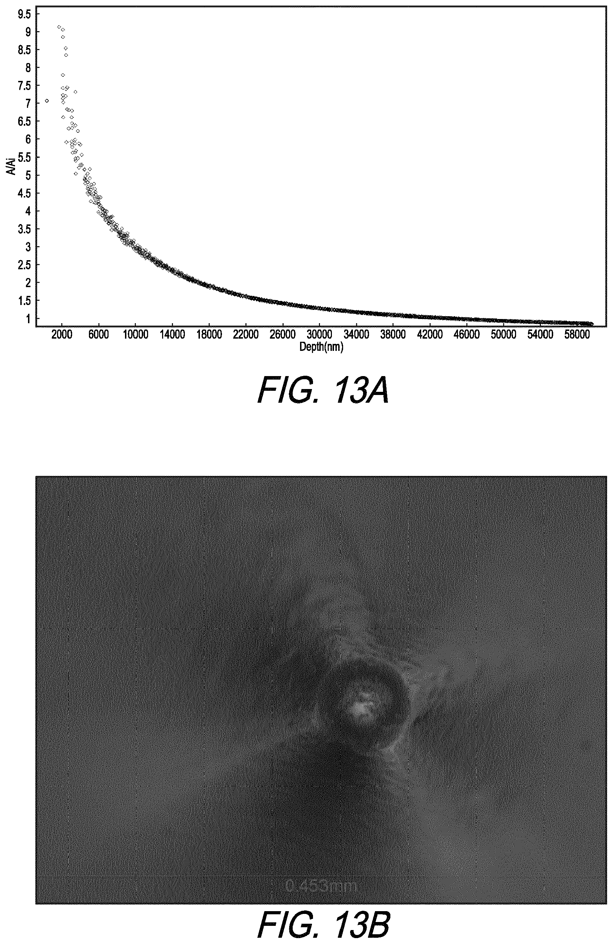

**FIGS. 13A** and **13B** is a graph, showing the deviation of the area function as a function of depth of one embodiment of an inadequate and/or used indenter, and an illustration of an indentation based on that inadequate and/or used indenter. Like FIGS. 11A, 11B, 12A, and 12B, FIGS. 13A and 13B show the results of an indentation by one embodiment of a Rockwell® spherical-conical tip with a radius of 100 $\mu$m on Delrin®, as the sample material. As discussed above, the deviation at any points may be used to establish whether an indenter is defective and the quality of the indenter. Here, FIGS. 13A and 13B show that the curve illustrated in the graphs do not match closely at all depths. For example, the area function of indenter# C at a depth of 4 $\mu$m is 5.4, and the area function at a depth of 14 $\mu$m is 2.45. These values are outside the normalize range of the area function of an ideal indenter, and thus, this indenter is considered an inadequate indenter.

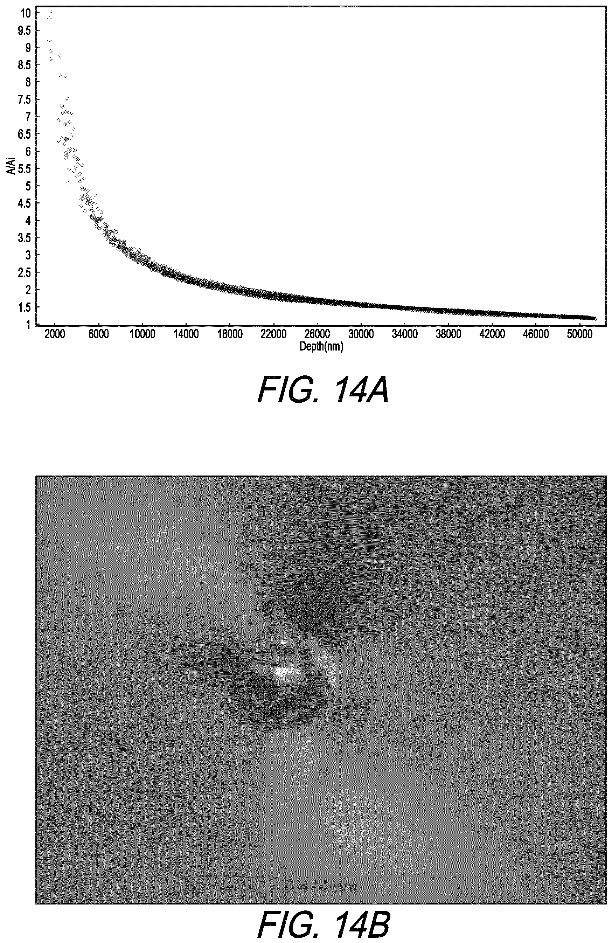

**FIGS. 14A** and **14B** is a graph, showing the deviation of the area function as a function of depth of another embodiment of an inadequate and/or used indenter, and an illustration of an indentation based on that inadequate and/or used indenter. FIGS. 14A and 14B show the results of an indentation by another embodiment of a Rockwell® spherical-conical tip with a radius of 100 $\mu$m on Delrin®, as the sample material. As discussed above, the deviation at any points may be used to establish whether an indenter is defective and the quality of the indenter. Here, FIGS. 14A and 14B show that the curve illustrated in the graphs do not match closely at all depths. For example, the area function of indenter# D at a depth of 4 $\mu$m is 5.6, and area function at a depth of 14 $\mu$m is 2.2.

**Table 2**

|  | Value at 4 $\mu$m | Value at 14 $\mu$m |
|---|---|---|
| Used Indenter #C | 5.4 | 2.45 |
| Used Indenter #D | 5.6 | 2.2 |

These values are outside the normalize range of the area function of an ideal indenter, and thus, this indenter is considered an inadequate indenter. Indenter# D also shows more variation and a wider line. Because the area function does not match closely at all depths, indenters #C and #D are thus considered inadequate.

Unless otherwise stated, all measurements, values, ratings, positions, magnitudes, sizes, locations, and other specifications that are set forth in this specification, including in the claims that follow, are approximate, not exact. They are intended to have a reasonable range that is consistent with the functions to which they relate and with what is customary in the art to which they pertain.

The foregoing description of the preferred embodiment has been presented for the purposes of illustration and description. While multiple embodiments are disclosed, still other embodiments will become apparent to those skilled in the art from the above detailed description, which shows and describes the illustrative embodiments. These embodiments are capable of modifications in various obvious aspects, all without departing from the spirit and scope of protection. Accordingly, the detailed description is to be regarded as illustrative in nature and not restrictive. Also, although not explicitly recited, one or more embodiments may be practiced in combination or conjunction with one another. Furthermore, the reference or non-reference to a particular embodiment shall not be interpreted to limit the scope of protection. It is intended that the scope not be limited by this detailed description, but only by the claims that are appended hereto.

Except as stated immediately above, nothing that has been stated or illustrated is intended or should be interpreted to cause a dedication of any component, step, feature, object, benefit, advantage, or equivalent, to the public, regardless of whether it is or is not recited in the claims.

## Claims

1. A method for calculating an indenter area function and quantifying a deviation from the ideal shape of an indenter, the steps comprising:

   providing a material testing apparatus, an indenter, and a sample;
   wherein said material testing apparatus comprises: a frame, an indenter module assembly, and a table;
   wherein said indenter module assembly comprises a force transducer and a displacement sensor;
   coupling said indenter to said material testing apparatus;
   wherein said indenter module assembly is configured to actuate said indenter along a displacement axis;
   wherein said force transducer is configured to determine one or more applied loads F of said indenter against said sample;
   placing said sample on said table of said material testing apparatus, such that said indenter may be in contact with a surface of said sample;
   performing at least one indentation test by applying said one or more applied loads $F$ to said indenter and said sample;
   determining said one or more applied loads $F$ with said force transducer;
   determining said depth $h$ of said indenter with said displacement sensor;
   recording a load data and a depth data;
   wherein said recording of said load data and said depth data is based on said one or more applied loads $F$ as a function of said depth $h$ of said indenter on said sample;
   calculating a Martens hardness data $HM$ of said surface of said sample based on said load data and said depth data; and
   calculating a first indenter area function $A(h)_1$ based on said Martens hardness data.

2. The method according to claim 1, further comprising the step of:

   normalizing said Martens hardness data $HM$.

3. The method according to claim 2, wherein said normalizing step is based on a material type of said sample and a tip type of said indenter.

4. The method according to claim 1, wherein a loading rate increase between approximately 0 to 5 mN in approximately two minutes or less, such that said indenter is initially applied to said surface of said sample very slowly at a plurality of low loads.

5. The method according to claim 4, wherein said indenter is selected from the group of indenters consisting of: a Berkovich and a Vickers;
   wherein said sample is a fused silica; and
   wherein said loading rate of said indentation test gradually increases between approximately 10 to 60 mN in approximately 20 seconds.

6. The method according to claim 1, wherein said indenter comprises a spherical tip; and wherein said sample has a Martens hardness *HM* less than approximately 4 GPa.

7.  The method according to claim 1, wherein said step of performing said at least one indentation test is performed in less than approximately three minutes and provides said load data and said depth data for calculating said area function *A(h)*.

8.  The method according to claim 1, wherein said indenter is a Vickers indenter; and
    wherein said calculating step of said Martens Hardness data *HM* is calculated by the following:

$$HM=F/26.43h^2$$

9.  The method according to claim 1, wherein said indenter is a Berkovich indenter; and wherein said calculating step of said Martens Hardness data *HM* is calculated by the following:

$$HM=F/26.44h^2$$

10. The method according to claim 1, wherein said indenter is selected from the group of indenters consisting of: a Berkovich, a Vickers, a Knoop, a spherical, a cubed corner, and a conico spherical.

11. The method according to claim 1, further comprising the steps:

    using said indenter one or more times to measure a surface of one or more materials;
    calculating a second indenter area function $A(h)_2$ of said indenter; and
    comparing said second indenter area function $A(h)_2$ with said first indenter area function $A(h)_1$.

12. The method according to claim 11, wherein the steps of calculating said second indenter area functions $A(h)_2$ of said indenter comprise the following steps:

    coupling said indenter to said material testing apparatus;
    wherein said indenter module assembly is configured to actuate said indenter along a displacement axis;
    wherein said force transducer is configured to determine one or more applied loads *F* of said indenter against said sample;
    placing said sample on said table of said material testing apparatus, such that said indenter may be in contact with a surface of said sample;
    performing at least one indentation test by applying said one or more applied loads *F* to said indenter and said sample;
    determining said one or more applied loads *F* with said force transducer;
    determining said depth *h* of said indenter with said displacement sensor;
    recording a load data and a depth data;
    wherein said recording of said load data and said depth data is based on said one or more applied loads *F* as a function of said depth *h* of said indenter on said sample;
    calculating a Martens Hardness data *HM* of said surface of said sample; and
    calculating said indenter area $A(h)_2$ based on said Martens hardness data.

13. The method according to claim 12, further comprising the step of:

    normalizing said Martens hardness data *HM before using said Martens hardness. data to calculate said second indenter area fuhctioh $A(h)_2$.*

14. The method according to claim 13, wherein said normalizing step is based on a material type of said sample and a tip type of said indenter.

15. The method according to claim 14, wherein said indenter comprises a spherical tip; and
    wherein said sample has a Martens hardness *HM* less than approximately 4 GPa.

**Patentansprüche**

1. Verfahren zur Berechnung einer Stempelbereichsfunktion und zur Quantifizierung einer Abweichung von der idealen Form eines Stempels, wobei die Schritte Folgendes aufweisen:

   Bereitstellen einer Materialprüfvorrichtung, eines Stempels, und einer Probe;
   wobei die Materialprüfvorrichtung Folgendes aufweist: einen Befestigungsrahmen, eine Stempelmodulanordnung, und eine Auflage;
   wobei die Stempelmodulanordnung einen Kraftaufnehmer und einen Wegsensor aufweist;
   Befestigen des Stempels an der Materialprüfvorrichtung;
   wobei die Stempelmodulanordnung konfiguriert ist, den Stempel entlang einer Verschiebeachse zu betätigen;
   wobei der Kraftaufnehmer konfiguriert ist, eine oder mehrere auf die Probe angewandte Belastungen $F$ des Stempels zu bestimmen;
   Anordnen der Probe auf der Auflage der Materialprüfvorrichtung, derart, dass der Stempel in Berührung mit einer Fläche der Probe stehen kann;
   Durchführen von mindestens einem Eindrücktest durch Anwenden der einen oder mehreren angewandten Belastungen $F$ auf den Stempel und die Probe;
   Bestimmen der einen oder mehreren angewandten Belastungen $F$ mit dem Kraftaufnehmer;
   Bestimmen der Tiefe $h$ des Stempels mit dem Wegsensor;
   Aufzeichnen von Belastungsdaten und Tiefendaten;
   wobei das Aufzeichnen der Belastungsdaten und der Tiefendaten auf der einen oder den mehreren angewandten Belastungen $F$ als eine Funktion der Tiefe $h$ des Stempels auf der Probe basiert;
   Berechnen von Martenshärtedaten $HM$ der Fläche der Probe auf Grundlage der Belastungsdaten und der Tiefendaten; und
   Berechnen einer ersten Stempelbereichsfunktion $A(h)_1$ auf Grundlage der Martenshärtedaten.

2. Verfahren nach Anspruch 1, das ferner folgenden Schritt aufweist:

   Normieren der Martenshärtedaten $HM$.

3. Verfahren nach Anspruch 2, wobei der Normierungsschritt auf einem Materialtyp der Probe und einem Spitzentyp des Stempels basiert.

4. Verfahren nach Anspruch 1, wobei eine Belastungsrate zwischen etwa 0 bis 5 mN in etwa zwei Minuten oder weniger derart ansteigt, dass der Stempel zunächst sehr langsam bei mehreren niedrigen Belastungen auf die Fläche der Probe angewandt wird.

5. Verfahren nach Anspruch 4, wobei der Stempel aus der Gruppe von Stempeln ausgewählt ist, die aus Folgenden besteht: einem Berkovich- und einem Vickers-Stempel;
   wobei die Probe ein Quarzglas ist; und
   wobei sich die Belastungsrate des Eindrücktests schrittweise zwischen etwa 10 bis 60 mN in etwa 20 Sekunden erhöht.

6. Verfahren nach Anspruch 1, wobei der Stempel eine sphärische Spitze aufweist; und wobei die Probe eine Martenshärte $HM$ von weniger als etwa 4 GPa aufweist.

7. Verfahren nach Anspruch 1, wobei der Schritt des Durchführens des mindestens einen Eindrücktests in weniger als etwa drei Minuten durchgeführt wird und die Belastungsdaten und die Tiefendaten zum Berechnen der Bereichsfunktion $A(h)$ bereitstellt.

8. Verfahren nach Anspruch 1, wobei der Stempel ein Vickers-Stempel ist; und wobei der Berechnungsschritt der Martenshärtedaten $HM$ folgendermaßen berechnet wird:

$$HM = F / 26{,}43 \ h^2$$

9. Verfahren nach Anspruch 1, wobei der Stempel ein Berkovich-Stempel ist; und wobei der Berechnungsschritt der Martenshärtedaten *HM* folgendermaßen berechnet wird:

$$HM = F / 26{,}44 \ h^2$$

**10.** Verfahren nach Anspruch 1, wobei der Stempel aus der Gruppe von Stempeln ausgewählt ist, die aus Folgenden besteht: einem Berkovich-, einem Vickers-, einem Knoop-, einem runden, einem würfeleckigen, und einem konisch-sphärischen Stempel.

**11.** Verfahren nach Anspruch 1, das ferner folgende Schritte aufweist:

einmaliges oder mehrmaliges Verwenden des Stempels zum Messen einer Fläche von einem oder mehreren Materialien;
Berechnen einer zweiten Stempelbereichsfunktion $A(h)_2$ des Stempels; und
Vergleichen der zweiten Stempelbereichsfunktion $A(h)_2$ mit der ersten Stempelbereichsfunktion $A(h)_1$.

**12.** Verfahren nach Anspruch 11, wobei die Schritte des Berechnens der zweiten Stempelbereichsfunktionen $A(h)_2$ des Stempels die folgenden Schritte aufweisen:

Befestigen des Stempels an der Materialprüfvorrichtung;
wobei die Stempelmodulanordnung konfiguriert ist, den Stempel entlang einer Verschiebeachse zu betätigen;
wobei der Kraftaufnehmer konfiguriert ist, eine oder mehrere auf die Probe angewandte Belastungen *F* des Stempels zu bestimmen;
Anordnen der Probe auf der Auflage der Materialprüfvorrichtung, derart, dass der Stempel in Berührung mit einer Fläche der Probe stehen kann;
Durchführen von mindestens einem Eindrücktest durch Anwenden der einen oder mehreren angewandten Belastungen *F* auf den Stempel und die Probe;
Bestimmen der einen oder mehreren angewandten Belastungen *F* mit dem Kraftaufnehmer;
Bestimmen der Tiefe *h* des Stempels mit dem Wegsensor;
Aufzeichnen von Belastungsdaten und Tiefendaten;
wobei das Aufzeichnen der Belastungsdaten und der Tiefendaten auf der einen oder den mehreren angewandten Belastungen *F* als eine Funktion der Tiefe *h* des Stempels auf der Probe basiert;
Berechnen von Martenshärtedaten *HM* der Fläche der Probe; und
Berechnen des Stempelbereichs $A(h)_2$ auf Grundlage der Martenshärtedaten.

**13.** Verfahren nach Anspruch 12, das ferner folgenden Schritt aufweist:

Normalisieren der Martenshärtedaten *HM vor der Nutzung der Martenshärtedaten zum Berechnen der zweiten Stempelbereichsfunktion A(h)$_2$*.

**14.** Verfahren nach Anspruch 13, wobei
der Normalisierungsschritt auf einem Materialtyp der Probe und einem Spitzentyp des Stempels basiert.

**15.** Verfahren nach Anspruch 14, wobei der Stempel eine sphärische Spitze aufweist; und
wobei die Probe eine Martenshärte *HM* von weniger als etwa 4 GPa aufweist.

## Revendications

**1.** Procédé de calcul d'une fonction de surface d'indentation et de quantification d'un écart par rapport à la forme idéale d'un dispositif d'indentation, les étapes comprenant :

la fourniture d'un appareil d'essai des matériaux, d'un dispositif d'indentation et d'un échantillon ;
dans lequel ledit appareil d'essai des matériaux comprend : un châssis, un ensemble de modules du dispositif d'indentation et une table ;
dans lequel ledit ensemble de modules du dispositif d'indentation comprend un transducteur de force et un capteur de déplacement ;

EP 3 076 153 B1

le couplage dudit dispositif d'indentation audit appareil d'essai des matériaux ;

dans lequel ledit ensemble de modules du dispositif d'indentation est configuré pour actionner ledit dispositif d'indentation le long d'un axe de déplacement ;

dans lequel ledit transducteur de force est configuré pour déterminer une ou plusieurs charges appliquées $F$ dudit dispositif d'indentation audit échantillon ;

la disposition dudit échantillon sur ladite table dudit appareil d'essai des matériaux, de sorte que ledit dispositif d'indentation puisse entrer en contact avec une surface dudit échantillon ;

la réalisation d'au moins un test d'indentation en appliquant lesdites une ou plusieurs charges appliquées $F$ audit dispositif d'indentation et audit échantillon ;

la détermination desdites une ou plusieurs charges appliquées $F$ à l'aide dudit transducteur de force ;

la détermination de ladite profondeur $h$ dudit dispositif d'indentation à l'aide dudit capteur de déplacement ;

l'enregistrement d'une donnée de charge et d'une donnée de profondeur ;

dans lequel ledit enregistrement desdites données de charge et de profondeur est basé sur lesdites une ou plusieurs charges appliquées $F$ en fonction de ladite profondeur $h$ dudit dispositif d'indentation sur ledit échantillon ;

le calcul de données de dureté Martens $HM$ de ladite surface dudit échantillon en fonction desdites données de charge et de profondeur ; et

le calcul d'une première fonction de surface d'indentation $A(h)_1$ en fonction desdites données de dureté Martens.

2. Procédé selon la revendication 1, comprenant en outre l'étape suivants :

la normalisation desdites données de dureté Martens $HM$.

3. Procédé selon la revendication 2, dans lequel ladite étape de normalisation est basée sur un type de matériau dudit échantillon et un type de pointe dudit dispositif d'indentation.

4. Procédé selon la revendication 1, dans lequel une vitesse de chargement augmente d'une valeur comprise entre environ 0 à 5 mN en environ deux minutes au plus, de sorte que ledit dispositif d'indentation est initialement appliqué très lentement à ladite surface dudit échantillon avec une pluralité de faibles charges.

5. Procédé selon la revendication 4, dans lequel ledit dispositif d'indentation est choisi dans le groupe des dispositifs d'indentation comprenant : le type Berkovich et le type Vickers ;

dans lequel ledit échantillon est une silice fondue ; et

dans lequel ladite vitesse de chargement dudit test d'indentation augmente progressivement d'une valeur comprise entre environ 10 à 60 mN en environ 20 secondes.

6. Procédé selon la revendication 1, dans lequel ledit dispositif d'indentation comprend une pointe sphérique ;

et dans lequel ledit échantillon a une dureté Martens $HM$ inférieure à environ 4 GPa.

7. Procédé selon la revendication 1, dans lequel ladite étape d'exécution dudit ou desdits essais d'indentation est effectuée en moins d'environ trois minutes et fournit lesdites données de charge et de profondeur pour calculer ladite fonction de surface $A(h)$.

8. Procédé selon la revendication 1, dans lequel ledit dispositif d'indentation est un dispositif d'indentation du type Vickers ; et dans lequel ladite étape de calcul des données de dureté Martens $HM$ est effectuée de la façon suivants :

$$HM = F/26,43\ h^2$$

9. Procédé selon la revendication 1, dans lequel ledit dispositif d'indentation est un dispositif d'indentation du type Berkovich ; et

dans lequel ladite étape de calcul des données de dureté Martens $HM$ est effectuée de la façon suivants :

$$HM = F/26,44\ h^2$$

10. Procédé selon la revendication 1, dans lequel ledit dispositif d'indentation est choisi dans le groupe des dispositifs

18

d'indentation comprenant : un type Berkovich, un type Vickers, un type Knoop, un type sphérique, un type en coin de cube et un type sous la forme d'un cône et d'une sphère.

**11.** Procédé selon la revendication 1, comprenant en outre les étapes suivantes :

l'utilisation dudit dispositif d'indentation en une ou plusieurs fois pour mesurer une surface d'un ou plusieurs matériaux ;
le calcul d'une seconde fonction de surface d'indentation $A(h)_2$ dudit dispositif d'indentation ; et
la comparaison de ladite seconde fonction de surface d'indentation $A(h)_2$ à ladite première fonction de surface d'indentation $A(h)_1$.

**12.** Procédé selon la revendication 11, dans lequel les étapes consistant à calculer lesdites secondes fonctions de surface d'indentation $A(h)_2$ dudit dispositif d'indentation comprennent les étapes suivantes :

le couplage dudit dispositif d'indentation audit appareil d'essai des matériaux ;
dans lequel ledit ensemble de modules du dispositif d'indentation est configuré pour actionner ledit dispositif d'indentation le long d'un axe de déplacement ;
dans lequel ledit transducteur de force est configuré pour déterminer une ou plusieurs charges appliquées $F$ dudit dispositif d'indentation audit échantillon ;
la disposition dudit échantillon sur ladite table dudit appareil d'essai des matériaux, de sorte que ledit dispositif d'indentation puisse entrer en contact avec une surface dudit échantillon ;
la réalisation d'au moins un test d'indentation en appliquant lesdites une ou plusieurs charges appliquées F audit dispositif d'indentation et audit échantillon ;
la détermination desdites une ou plusieurs charges appliquées $F$ à l'aide dudit transducteur de force ;
la détermination de ladite profondeur $h$ dudit dispositif d'indentation à l'aide dudit capteur de déplacement ;
l'enregistrement d'une donnée de charge et d'une donnée de profondeur ;
dans lequel ledit enregistrement desdites données de charge et de profondeur est basé sur lesdites une ou plusieurs charges appliquées $F$ en fonction de ladite profondeur $h$ dudit dispositif d'indentation sur ledit échantillon ;
le calcul des données de dureté Martens $HM$ de ladite surface dudit échantillon ; et
le calcul de ladite surface d'indentation $A(h)_2$ en fonction desdites données de dureté Martens.

**13.** Procédé selon la revendication 12, comprenant en outre l'étape suivants :

la normalisation desdites données de dureté Martens $HM$ *avant d'utiliser lesdites données de dureté Martens pour calculer ladite seconde fonction de surface d'indentation $A(h)_2$.*

**14.** Procédé selon la revendication 13, dans lequel
ladite étape de normalisation est basée sur un type de matériau dudit échantillon et un type de pointe dudit dispositif d'indentation.

**15.** Procédé selon la revendication 14, dans lequel ledit dispositif d'indentation comprend une pointe sphérique ; et dans lequel ledit échantillon a une dureté Martens $HM$ inférieure à environ 4 GPa.

FIG. 1

200

205

providing a material testing apparatus, an indenter, and a sample

210

coupling the indenter to the material testing apparatus

215

placing the sample on the table of the material testing machine, such that the indenter may be in contact with a surface of the sample

220

performing at least one indentation test by applying the one or more applied loads $F$ to the indenter and the sample

225

measuring the one or more applied loads $F$ with the force transducer

230

measuring the depth $h$ of the indenter with the displacement sensor

235

recording load data of the one or more applied loads $F$ as a function of depth $h$ of the indenter on the sample

240

calculating a Martens hardness data $HM$ at the surface of the sample

245

calculating an indenter area function $A(h)$ based on the Martens hardness data $HM$

*FIG. 2*

300

305

providing a material testing apparatus, an indenter, and a sample

310

calculating a first indenter area function $A(h)_1$ of the indenter

315

using the indenter one or more times to measure a surface of one or more materials

320

calculating a second indenter area function $A(h)_2$ of the indenter

325

comparing the second indenter area function $A(h)_2$ with the first indenter area function $A(h)_1$

FIG. 3

400

405

coupling the indenter to the material testing apparatus

410

placing the sample on the stage of the material testing machine, such that the indenter may be in contact with a surface of the sample

415

performing at least one indentation test by applying the one or more applied loads $F$ to the indenter and the sample

420

measuring the one or more applied loads $F$ with the force transducer

425

measuring the depth $h$ of the indenter with the displacement sensor

430

recording load data of the one or more applied loads $F$ as a function of depth $h$ of the indenter on the sample

435

calculating a Martens Hardness data $HM$ at the surface of the sample

440

calculating the indenter area function $A(h)_1$ and $A(h)_2$ based on the Martens hardness data $HM$

*FIG. 4*

*FIG. 5*

*FIG. 6*

*FIG. 7*

*FIG. 8*

27

FIG. 9A

*FIG. 9B*

FIG. 10

FIG. 11A

FIG. 11B

FIG. 12A

FIG. 12B

FIG. 13A

FIG. 13B

FIG. 14A

FIG. 14B

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **LAURENCE BRICE.** ESTABLIHMENT OF A MARTENS HARDNESS CALIBRATION SERVICE. *Hardness Measurement Theory and Application in Laboratories and Industries,* 11 November 2004